# EUROPEAN PATENT SPECIFICATION

(11) **EP 3 116 083 B1**
(45) Date of publication and mention of the grant of the patent: **23.09.2020**
(21) Application number: 16163643.6
(22) Date of filing: 04.04.2016
(51) Int. Cl.: H02J 3/24

(54) **POWER NETWORK MONITORING SYSTEM AND METHOD**
LEISTUNGSNETZWERKÜBERWACHUNGSSYSTEM UND VERFAHREN
SYSTÈME DE SURVEILLANCE DE RÉSEAU ÉLECTRIQUE ET PROCÉDÉ

(30) Priority: 07.07.2015 KR 20150096735
(43) Date of publication of application: 11.01.2017
(73) Proprietor: LSIS Co., Ltd., Gyeonggi-Do 14119 (KR)
(72) Inventor: PARK KYOUNG HO, Gyeonggi-do (KR)
(74) Representative: K&L Gates LLP

(56) References cited:
- EP-A1- 1 898 509
- EP-A1- 2 299 555
- US-A1- 2009 027 067
- US-A1- 2012 082 048
- Schavemaker Pieter ET AL: "electrical power system essentials" In: "electrical power system essentials", 1 February 2009 (2009-02-01), Wiley, XP055545452, ISBN: 978-0-470-51027-8 pages 234-235,
- VAHID SALEHI ET AL: "Implementation of real-time optimal power flow management system on hybrid AC/DC smart microgrid", INDUSTRY APPLICATIONS SOCIETY ANNUAL MEETING (IAS), 2012 IEEE, IEEE, 7 October 2012 (2012-10-07), pages 1-8, XP032278565, DOI: 10.1109/IAS.2012.6374113 ISBN: 978-1-4673-0330-9

## Description

### BACKGROUND

The present disclosure relates to a power network monitoring system capable of monitoring a power network in real time and a method thereof.

According to national economic growth and improvement in people's living standards, convenience of use and power consumption, which is an engine of the national economic growth, continuously increase and an increase in power demand makes a power system complicated, diversified, and having large capacity. However, the 2003 blackout occurring in North America and Europe results from that an initial small scale accident is not rapidly detected and handled to allow power blackout to spread to the entire power system due to weakness of a system for data acquisition and monitoring control for the power system. Accordingly, importance is being magnified for general operation state data acquisition, system analysis, and remote detection control for the power system in an energy management system.

As a prior art for detecting, analyzing, and recording a fault or accident in a power system, Korean Patent Laid-open Publication No. 10-2003-0037499 (published on May 14, 2003, hereinafter citation 1) was proposed.

However, in citation 1, only related data is detected, analyzed, and recorded, and an action corresponding thereto is not taken.

In addition, in citation 1, only a state of a specific substation is figured out and states of various substations connected thereto are not figured out.

EP2299555 discloses a fault-tolerant system of controlling electromechanical oscillations in a power system, where the system includes at least one phasor measurement unit obtaining phasor data signals including oscillating mode signals, at least one wide area control system receiving the phasor data signals from the phasor measurement unit, and at least one actuating device for receiving a control signal from the wide area control system.

US20120082048 discloses a method for smart grid communications and management that includes receiving phasor measurement unit (PMU) data in a first transmission, converting the first transmission into a multicast transmission, and multicasting the PMU data to a multicast group address, which identifies a plurality of subscribers.

EP1898509 discloses a system for protection, control, and monitoring of delivery of electric power energy, where the system includes an input/output interface device (brick) coupled with a piece of primary equipment and configured to receive field data from the piece of primary equipment, an intelligent electronic device (IED) coupled with the brick, a patch panel coupled with the brick and configured to route the field data to the IED, a first communication link coupling the brick and the patch panel, and a second communication link coupling the patch panel and the IED.

US20090027067 discloses a method of identifying voltage instability in a power system having a plurality of monitored transmission lines, where the method includes receiving periodic input regarding the plurality of transmission lines, calculating an index for each of said plurality of transmission lines in the power system using the input, and identifying a weakest line amongst said plurality of transmission lines.

Electrical Power System Essentials, Schavemaker Pieter et al., (1 February 2009), Wiley, ISBN: 978-0-470-51027-8, pages 234-235, discloses that a voltage drop in a norther part of Italy caused a number of power plants to disconnect automatically from the grid, and because Italy was isolated from the rest of Europe, the frequency dropped to 49 Hz, and two and a half minute after the isolation of Italy from the European network, the frequency reached the absolute lower limit of 47.5 Hz and the lights went out throughout Italy.

### SUMMARY

Embodiments provide a power network monitoring system and method for solving the above and other limitations.

Embodiments also provide a power network monitoring system and method capable of communicating between substations connected to each other.

Embodiments also provide a power network monitoring system and method capable of allowing a substation, in which a master device such as an PMU master is installed, to control a substation, in which a slave device is installed, based on data obtained from a plurality of substations in which a plurality of slave devices such as an PMU slave are respectively installed.

Embodiments also provide a power network monitoring system and method through which a master device and slave devices are installed and operated in an entire power network that includes an AC system and an HVDC system linked to the AC system.

The present invention is defined by the features of independent claim. Preferred beneficial embodiments thereof are defined by the sub-features of the dependent claims.

The details of one or more embodiments are set forth in the accompanying drawings and the description below. Other features will be apparent from the description and drawings, and from the claims.

### BRIEF DESCRIPTION OF THE DRAWINGS

Fig. 1 illustrates a power network monitoring system according to a first embodiment.
Fig. 2 is a block diagram illustrating a configuration of a slave device.
Fig. 3 is a block diagram illustrating a configuration of a master device.
Fig. 4 illustrates a power network monitoring system according to a second embodiment.
Fig. 5 is a flowchart illustrating a monitoring method in a power network monitoring system according to an embodiment.

### DETAILED DESCRIPTION OF THE EMBODIMENTS

Reference will now be made in detail to the embodiments of the present disclosure, examples of which are illustrated in the accompanying drawings, in which like numbers refer to like elements throughout, and a repetitive explanation will be omitted.

As can be seen from the foregoing, the above-described embodiments is not limited to the configurations and methods of the embodiments described above, but the entirety of or a part of the embodiments may be configured to be selectively combined such that various modifications of the embodiments can be implemented.

In the following description, usage of suffixes such as 'module', 'part' or 'unit' used for referring to elements is given merely to facilitate explanation of the present invention, without having any significant meaning by itself. In the following description, detailed descriptions of well-known functions or constructions will be omitted since they would obscure the invention in unnecessary detail. In addition, the accompanying drawings are used to help easily understand the technical idea of the present invention and it should be understood that the idea of the present invention is not limited by the accompanying drawings.

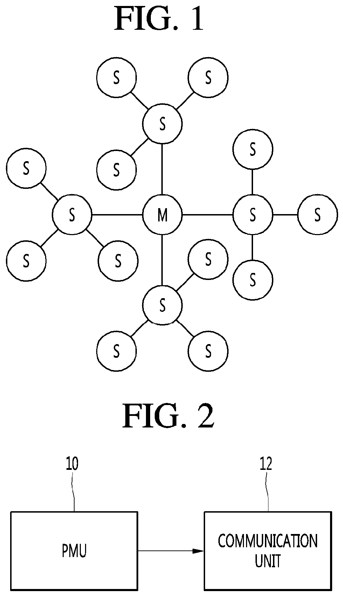

Fig. 1 illustrates a power network monitoring system according to a first embodiment.

As illustrated in Fig. 1, a power network monitoring system according to a first embodiment includes a master device M and a plurality of slave devices S connected to the master device M.

In embodiments, a term "slave" may mean collecting certain data and deliver the collected data, and a term "master" may mean determining and taking action based on data delivered from a slave device S, and delivering commands to the slave device S.

The master device M and the slave device S may be installed, for example, in substations.

The substations may include a 154 kV substation, a 345 kV substation, and a 765 kV substation.

For example, the master device M may be installed in a highest class substation, for example, the 765 kV substation, and the slave device S may be installed in the 154 kV substation or the 345 kV substation, but the embodiment is not limited thereto.

The substation, which is an apparatus for transforming power, namely, a voltage, may transform, for example, a voltage of 345 kV to a voltage of 765 kV, or, for example, transform a voltage of 765 kV to a voltage of 345 kV.

For example, when power is transmitted from a power plant where the power is generated to a demand side, for example, a factory, substations may be installed between the power plant and the factory, wherein the substations include a 154 kV class substation for transforming the power, namely, a voltage of the power plant to 154 kV and transmitting the 154 kV, a 345 kV class substation for transforming the 154 kV to 345 kV and transmitting the 345 kV, a 765 kV class substation for transforming the 345 kV to 765 kV and transmitting the 765 kV, a 345 kV class substation for transforming 765 kV again to 345 kV and transmitting the 345 kV, and a 154 kV class substation for transforming 345 kV again to 154 kV and transmitting the 154 kV.

Data transmission/reception is enabled by using a physical communication cable between the master device M and the slave device S. The slave devices S may transmit data obtained from the substations thereof to the master device M through the communication cable and the master device M may transmit required actions or commands to the slave device S based on the data received from the slave devices S through the communication cable.

As a data communication scheme of the embodiment, a parallel communication scheme or a serial communication scheme may be used. As the parallel communication scheme, there is an FDD or CD-ROM, etc., and as the serial communication scheme, there is a LAN, RS232, or X.25.

As the data communication of the embodiment, wired communication or wireless communication may be used. As the wireless communication, an RF, Bluetooth, Ethernet, Home PNA, Power line communication (PLC), IEEE1394, Home RF, or wireless LAN, etc., may be used.

In Fig. 1, solid lines connected between the master device M and the slave devices S or between the slave devices S represent communication cables, and through the communication cables, data transmission/reception is enabled between the master device M and the slave devices S.

Activation function for a data transmission/reception is set in advance to enable data transmission/reception between the master device M and each slave device S or a deactivation function for a data transmission/reception may be set not to enable data transmission and reception. Through such a setting, in certain cases, namely, in a case where the activation function is set, data transmission and reception is enabled between a specific slave device S and the master device M. However, in another case where the deactivation function is set, data transmission/reception may not be enabled between the specific slave device S and the master device M. Accordingly, the master device M may adjust the number of slave devices S which are managed by the master device M, namely, through which data transmission/reception is enabled.

In Fig. 1, one master device M is illustrated but the number of master devices M may be two or more, and is not limited thereto.

Fig. 2 is a block diagram illustrating a configuration of a slave device.

Referring to Fig. 2, the slave device S may include a phasor measurement unit (PMU) 10 and a communication unit 12.

The PMU 10 may measure data such as reactive/active power, magnitudes and phase angles of a voltage and current, at one or more points in a substation in which the slave devices S are installed. Accordingly, at least one PMU 10 may be installed in the substation in which the slave device S is installed.

The communication unit 12 may transmit data measured by at least one PMU 10 to the master device M by using a communication cable. In addition, the communication unit 12 may receive data, for example, a command or a control signal, from the master device M. In this case, a slave device S or a substation in which the slave device S is installed may perform a specific function, for example, line blocking.

On the other hand, the data obtained by the PMU 10 may be synchronized. In other words, the data obtained by the PMU 10 may be synchronized with a common time of a GPS wireless clock. Data obtained by each PMU 10 of the slave device S installed in each substation may be synchronized with the common time of the GPS wireless clock.

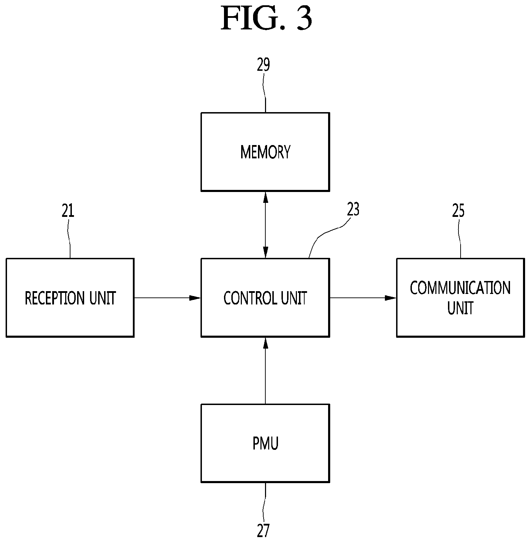

Fig. 3 is a block diagram illustrating a configuration of a master device.

Referring to Fig. 3, the master device M includes a reception unit 21, a control unit 23, a communication unit 25, a memory 29, and a PMU 27.

The PMU 27 may measure data such as reactive/active power, magnitudes and phase angles of a voltage and current at one or more points in a substation in which the master device M is installed. Accordingly, at least one PMU 27 is installed in the substation in which the master device M is installed.

The memory 29 may store the determined result or the analyzed result from the control unit 23 and store setting data set in the master device M. The setting data may include, for example, the number of or identification information on the slave devices S capable of receiving related data, but is not limited thereto. The determination result may be, but is not limited to, power blackout related information, fault related information, a state of or situation information on a substation in which the slave device S is installed, or a load state of or situation information on another substation connected to the substation.

Such a determination result may be stored in the memory 29 temporarily or in real time to be used later as back data at the time of occurrence of power network blackout.

The reception unit 21 may receive data transmitted from the slave device S. Here, the data may be reactive/active power, magnitudes and phase angles of a voltage and current.

The communication unit 25 may transmit data to the slave device S. Here, the data may be a command or a control signal, but is not limited thereto. The slave device S may perform a specific function, for example, line blocking in response to the command or control signal.

For example, when a power blackout accident occurs in a factory connected to the substation in which the slave device S is installed, data to which the power blackout accident is reflected by the slave device S may be measured and transmitted to the master device M. The master device M may figure out the power blackout accident of the factory through the data to which the power blackout accident is reflected and then transmit a command on line blocking to the slave device S. Accordingly, the substation in which the slave device S is installed may control such that a line installed between the slave device S and the factory is blocked according to the command.

The control unit 23 may figure out a state or situation of the substation, in which a slave device S is installed, based on data received through the reception unit 21 from the corresponding slave device S, or a state or situation of another substation or a load connected to the substation, and may generate a command or control signal and transmit the command or control signal to the slave device S through the communication unit 25 in order to take a necessary action based on the figured out state or situation.

According to an embodiment, a power network monitoring system is divided into a slave device and a master device M, and data measured by the slave device S is transmitted to the master device M. The master device M controls such that a necessary action is taken to a substation, in which the slave device S is installed, based on data measured by the slave device S. Accordingly a cascading phenomenon caused by a power blackout or fault accident may be prevented beforehand.

According to an embodiment, since related data is measurable at the slave device S in real time, accident is prevented in real time to enable efficient power network management.

On the other hand, a power network monitoring system of an embodiment may be applied to not only an AC system but also an HVDC system or a linked network of the AC system and HVDC system.

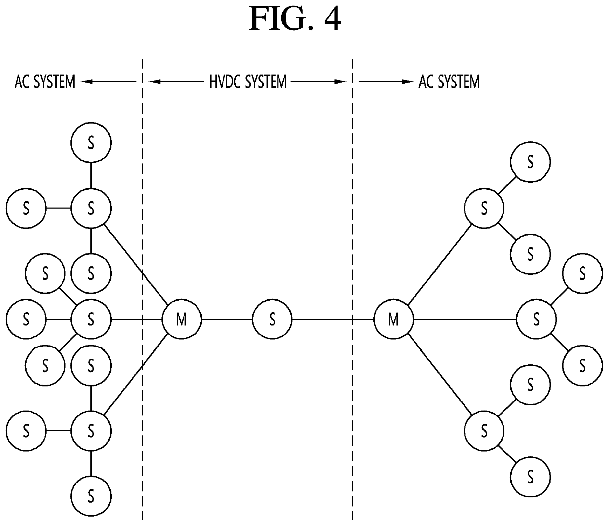

A power network monitoring system at the time of linking the AC system and HVDC system is illustrated in Fig. 4.

Fig. 4 illustrates a power network monitoring system according to a second embodiment.

Referring to Fig. 4, a power network monitoring system according to a second embodiment includes a master device M and a plurality of slave devices S connected to the master device M.

The master device M may be installed in a DC transmission substation of the HVDC system and the slave device S may be installed in a substation of the AC system.

Alternatively, the master device M is installed in a substation of the AC system and the slave device S is installed in a DC transmission substation of the HVDC system, but the embodiment is not limited thereto.

The DC transmission substation of the HVDC system may be connected to the substation of the AC system. In this case, the DC transmission substation of the HVDC system may convert AC power provided from the substation of the AC system, namely, an AC voltage into a DC voltage. When the AC voltage provided from the substation of the AC system is a 345 kV AC voltage, the DC transmission substation may transform the 345 kV AC voltage to a 765 kV DC voltage.

In detail, when the AC voltage provided from the substation of the AC system is a 345 kV AC voltage, the DC transmission substation may transform the 345 kV AC voltage to a 765 kV AC voltage and then convert the 765 kV AC voltage to a 765 kV DC voltage.

Alternatively, the 345 kV AC voltage may be firstly converted to a 345 kV DC voltage and then the 345 kV DC voltage may be transformed to a 765 kV DC voltage, but the embodiment is not limited thereto.

The DC transmission substation may include one of a 154 kV substation, a 345 kV substation, and a 765 kV substation, but in view of minimization of power loss, the DC transmission substation may preferably include the 765 kV substation.

For example, the DC transmission substation in which the master device M is installed may be a highest class substation, for example, a 765 kV DC transmission substation, and the substation in which the slave device S is installed may be a 154 kV substation or a 345 kV substation, but the embodiment is not limited thereto.

As illustrated in Fig. 4, the DC transmission substation in which the master device M is installed may be an HVDC system that converts an AC voltage to a DC voltage and transmits the DC voltage, and the substation in which the slave device S is installed may be an AC system that transforms an AC voltage.

In the HVDC system, the DC transmission substation connected to the substation in which the slave device S is installed may be a transmission side DC transmission substation, and another DC transmission substation connected to the transmission side DC transmission substation may be a demand side DC transmission substation.

A slave device S may be installed in the demand side DC transmission substation, but the embodiment is not limited thereto. The slave device S installed in the demand side DC transmission substation may also transmit data measured by the demand side DC transmission substation to a master device M installed in the transmission side DC transmission substation.

The demand side DC transmission substation may convert a 765 kV DC voltage to a 765 kV AC voltage and then transform the 765 kV AC voltage to a 345 kV AC voltage or a 154 kV AC voltage.

The AC system substation provided with a master device M is connected to the demand side DC transmission substation provided with a slave device S, and at least one AC system substation may be connected to the AC system substation. In this case, a slave device S may be installed in each of at least one AC system substation, but the embodiment is not limited thereto.

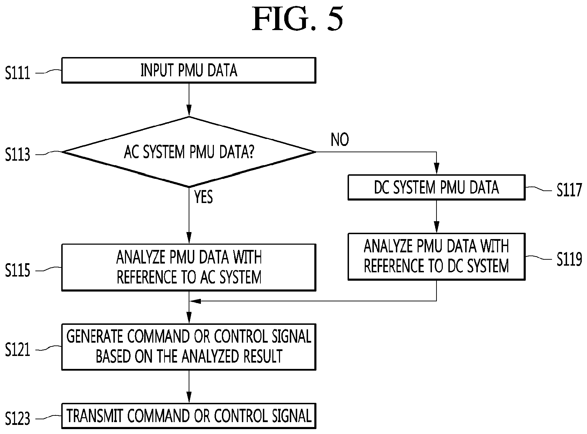

Fig. 5 is a flowchart illustrating a monitoring method in a power network monitoring system according to an embodiment.

Fig. 5 illustrates an operation method in a master device.

Referring to Figs. 1 to 5, PMU data transmitted from a plurality of slave devices S is input (operation Sill).

Here, the PMU data may mean data measured by the PMU 10 of the slave device S.

The PMU data may include reactive/active power, magnitudes and phase angles of a voltage and current.

The control unit 23 of the master device M checks whether the PMU data is AC system PMU data or HVDC system PMU data (operation S113).

The PMU data may be differed according to an AC system and HVDC system. For example, the AC system PMU data may be reactive/active power, a voltage, and a current in a sinusoidal wave type. For example, the HDVC system PMU data may be reactive/active power, a voltage, and a current at a constant level.

When the PMU data is AC system PMU data, the control unit 23 analyzes the PMU data with reference to the AC system.

Since the AC system PMU data is different from the HVDC system PMU data, it is necessary to analyze the PMU data with references respectively proper thereto.

For the AC system PMU data, a rate that a waveform of a sinusoidal wave varies may be used as a reference for analyzing AC system PMU data. Accordingly, the AC system PMU data may be analyzed based on the rate that the waveform of the sinusoidal wave varies.

For example, when the rate that the waveform of a sinusoidal wave of the AC system PMU data varies exceeds a first rate set as a reference value, it may be considered that a fault occurs in a substation in which a slave device S, which transmits the AC system PMU data, is installed.

For example, when the rate that the waveform of a sinusoidal wave of the AC system PMU data varies exceeds a second rate greater than the first rate, it may be considered that a power blackout occurs in a substation in which a slave device S, which transmits the AC system PMU data, is installed.

When the PMU data is not the AC system PMU data, the PMU data may be HDVC system PMU data (operation S117).

In this case, the control unit 23 analyzes the PMU data with reference to the HVDC system (operation S119).

For the HVDC system PMU data, an offset value may be a reference for analyzing the HVDC system PMU data. Accordingly, the HVDC system PMU data may be analyzed according to a degree that exceeds each of a plurality of offset values.

For example, when a certain level of a DC component of the HVDC system PMU data exceeds a first offset value set as a reference value, it may be considered that a fault occurs in a DC transmission substation in which a slave device S, which transmits the HVDC system PMU data, is installed.

For example, when the certain level of the DC component of the HVDC system PMU data exceeds a second offset value greater than the first offset value, it may be considered that a power blackout occurs in the DC transmission substation in which the slave device S, which transmits the HVDC system PMU data, is installed.

The control unit 23 generates a command or control signal based on the analyzed result (operation S121), and controls such that the generated command or control signal is transmitted to the substation in which the corresponding slave device S is installed through the communication unit 24 (operation S123).

Thereafter, the substation in which the corresponding slave device S is installed may take an action corresponding to a command or controls signal provided from the master device M. For example, such an action may block lines between a substation and a load in which a power blackout occurs among other substations or loads connected to the corresponding substation and inform a user of the fault or power blackout through the monitor.

According to at least one embodiment, a cascading phenomenon due to a power blackout or fault accident may be prevented in advance by dividing a power network monitoring system into a slave device and a master device and sending data measured by the slave device to the master device so that the master device controls necessary actions to be taken to a substation in which the slave device is installed based on the data measured by the slave device.

In addition, according to at least one embodiment, since the slave device may measure related data in real time, an accident prevention may be performed in real time to enable a power network to be efficiently managed.

According to embodiments, a master device and a slave device are installed in a corresponding power plant, even when an AC system is linked to an HVDC system. Accordingly, power network management is enabled not only for the AC system but also for the HVDC system by the master device, and integrated management for the power network is enabled.

An additional scope of applicability of the present disclosure shall become obvious from the detailed description in the following. However, it should be understood that the detailed description and specific examples, while indicating preferred embodiments of the present disclosure, are given by way of illustration only, since various changes and modifications within the scope of the present disclosure will become apparent to those skilled in the art from the detailed description.

Although embodiments have been described with reference to a number of illustrative embodiments thereof, it should be understood that numerous other modifications and embodiments can be devised by those skilled in the art that will fall within the scope of the principles of this disclosure.

## Claims

1. A power network monitoring system that monitors a plurality of substations, the power network monitoring system comprising:
a master device (M) installed in at least one substation among the plurality of substations; and
a plurality of slave devices (S) installed in remaining substations except from the substation in which the master device (M) is installed,
wherein each of the slave devices (S) comprises:
a first phasor measurement unit (PMU) (10) configured to measure first PMU data such as reactive/active power, magnitudes and phase angles of a voltage and current of the substation in which the slave device (S) is installed; and
a first communication unit (12) configured to transmit the first PMU data measured by the first PMU (10) to the master device (M),
**characterized in that** the power network monitoring system is configured to monitor an AC system and an High Voltage Direct Current, HVDC, system,
wherein the master device (M) is installed in a substation among AC system substations or HVDC system substations,
wherein each of the slave devices (S) is installed in a substation among the AC system substations or the HVDC system substations except from the substation in which the master device (M) is installed, and
wherein the master device (M) is configured to:
check whether the received first PMU data is AC system data or HVDC system data based on the received first PMU data,
determine that a fault or a power blackout occurs in the AC system substation in which the slave device (S) is installed using a variation rate of a waveform of a sinusoidal wave of the first PMU data if the first PMU data is the AC system data,
determine that a fault or a power blackout occurs in the HVDC system substation in which the slave device (S) is installed using a DC component of the first PMU data if the first PMU data is the HVDC system data,
generate a command for taking action of a corresponding slave device (S) based on the determined result, and
transmit the generated command to the corresponding slave device (S),
wherein the master device (M) is further configured to:
measure second PMU data such as reactive/active power, magnitudes and phase angles of a voltage and current of the substation in which the master device (M) is installed,
check whether the second PMU data is the AC system data or the HVDC system data based on the second PMU data,
determine that a fault or a power blackout occurs in the AC system substation in which the master device (M) is installed using a variation rate of a waveform of a sinusoidal wave of the second PMU data if the second PMU data is the AC system data,
determine that a fault or a power blackout occurs in the HVDC system substation in which the master device (M) is installed using a DC component of the second PMU data if the second PMU data is the HVDC system data.

2. The power network monitoring system according to claim 1, wherein the first PMU data or command is transmitted and/or received between the master device (M) and the corresponding slave device (S) by using one of a communication cable and wireless communication.

3. The power network monitoring system according to claim 1, wherein the substation comprises one of a 154 kV class substation, a 345 kV class substation, and a 765 kV class substation,
the master device (M) is installed at least in the 765 kV class substation.

4. The power network monitoring system according to claim 1, wherein the master device (M) is installed in one of the HVDC system ; substations.

5. The power network monitoring system according to claim 1, wherein the master device (M) is installed in one of the AC system substations.

6. The power network monitoring system according to claim 1, wherein the master device (M) comprises:
a reception unit (21) configured to receive data transmitted from the slave device (S);
a control unit (23) configured to analyze the data received from the reception unit (21) and to generate a command for taking action of the corresponding slave device (S);
a second communication unit (25) configured to transmit the command generated from the control unit (23) to the corresponding slave device (S);
a second PMU (27) configured to measure the second PMU data; and
a memory (29) configured to store a result analyzed from the control unit (23) and setting data set in the master device (M).

7. The power network monitoring system according to claim 6, wherein the setting data comprises the number of data-receivable slave devices (S) and identification information on the data-receivable slave devices (S).

8. The power network monitoring system according to claim 1, wherein an activation function or a deactivation function that indicates whether data transmission and/or reception is enabled is set between the master device (M) and the slave device (S).

9. The power network monitoring system according to claim 1, wherein the measured first PMU data is synchronized with a common time of a GPS wireless clock.

## Patentansprüche

1. Ein Stromnetzwerküberwachungssystem, das eine Vielzahl von Unterstationen überwacht, das Stromnetzwerküberwachungssystem umfassend:
ein Hauptgerät (M), das in zumindest einer Unterstation aus der Vielzahl von Unterstationen installiert ist; und
eine Vielzahl von Nebengeräten (S), die in den verbleibenden Unterstationen mit Ausnahme der Unterstation, in der das Hauptgerät (M) installiert ist, installiert sind,
wobei jedes der Nebengeräte (S) Folgendes umfasst:
eine erste Phasormessungseinheit (phasor measurement unit,
PMU) (10), die dazu konfiguriert ist, erste PMU-Daten, wie etwa reaktive/aktive Leistung, Größen und
Phasenwinkel einer Spannung und eine Stromstärke der Unterstation, in der das Nebengerät (S) installiert ist, zu messen; und
eine erste Kommunikationseinheit (12), die dazu konfiguriert ist, die durch die erste PMU (10) gemessenen ersten PMU-Daten an das Hauptgerät (M) zu übertragen,
**dadurch gekennzeichnet, dass** das
Stromnetzwerküberwachungssystem dazu konfiguriert ist, ein Wechselstromstrom und ein Hochspannungs-Gleichstrom (High Voltage Direct Current, HVDC)-System zu überwachen,
wobei das Hauptgerät (M) in einer Unterstation aus Wechselstromsystem-Unterstationen oder HVDC-System-Unterstationen installiert ist,
wobei jedes der Nebengeräte (S) in einer Unterstation aus den Wechselstromsystem-Unterstationen oder den HVDC-System-Unterstationen mit Ausnahme der Unterstation, in der das Hauptgerät (M) installiert ist, installiert ist und wobei das Hauptgerät (M) zu Folgendem konfiguriert ist:
Überprüfen, ob die ersten empfangenen PMU-Daten Wechselstromsystemdaten oder HVDC-Systemdaten sind, basierend auf den ersten PMU-Daten,
Bestimmen, dass eine Störung oder ein Stromausfall in der Wechselstromsystem-Unterstation auftritt, in der ein Nebengerät (S) installiert ist, unter Nutzung einer Änderungsrate einer Wellenform einer Sinuswelle der ersten PMU-Daten, wenn die ersten PMU-Daten die Wechselstromsystemdaten sind,
Bestimmen, dass eine Störung oder ein Stromausfall in der HVDC-System-Unterstation auftritt, in der das Nebengerät (S) installiert ist, unter Nutzung einer Gleichstromkomponente der ersten PMU-Daten, wenn die ersten PMU-Daten die HVDC-Systemdaten sind,
Erzeugen eines Befehls zum Ausführen einer Handlung durch ein entsprechendes Nebengerät (S),
basierend auf dem bestimmten Ergebnis, und
Übertragen des erzeugten Befehls an das entsprechende Nebengerät (S), wobei das Hauptgerät (M) ferner zu Folgendem konfiguriert ist:
Messen zweiter PMU-Daten, wie etwa reaktive/aktive Leistung, Größen und Phasenwinkel einer Spannung und einer Stromstärke der Unterstation, in der das Hauptgerät (M) installiert ist, Überprüfen, ob die zweiten empfangenen PMU-Daten die Wechselstromsystemdaten oder die HVDC-Systemdaten sind, basierend auf den zweiten PMU-Daten,
Bestimmen, dass eine Störung oder ein Stromausfall in der Wechselstromsystem-Unterstation auftritt, in der das Hauptgerät (M) installiert ist, unter Nutzung einer Änderungsrate einer Wellenform einer Sinuswelle der zweiten PMU-Daten, wenn die PMU-Daten die Wechselstromsystemdaten sind,
Bestimmen, dass eine Störung oder ein Stromausfall in der HVDC-System-Unterstation auftritt, in der das Hauptgerät (M) installiert ist, unter Nutzung einer Gleichstromkomponente der zweiten PMU-Daten, wenn die zweiten PMU-Daten die HVDC-Systemdaten sind.

2. Stromnetzwerküberwachungssystem nach Anspruch 1, wobei die ersten PMU-Daten oder ein Befehl durch das Verwenden eines aus einem Kommunikationskabel und Drahtloskommunikation zwischen dem Hauptgerät (M) und dem entsprechenden Nebengerät (S) übertragen und/oder empfangen wird.

3. Stromnetzwerküberwachungssystem nach Anspruch 1, wobei die Unterstation eines aus einer Unterstation der 154 kV-Klasse, einer Unterstation der 345 kV-Klasse und einer Unterstation der 765 kV-Klasse umfasst,
wobei das Hauptgerät (M) zumindest in der Unterstation der 765 kV-Klasse installiert ist.

4. Stromnetzwerküberwachungssystem nach Anspruch 1, wobei das Hauptgerät (M) in einer der HVDC-System-Unterstationen installiert ist.

5. Stromnetzwerküberwachungssystem nach Anspruch 1, wobei das Hauptgerät (M) in einer der Wechselstromsystem-Unterstationen installiert ist.

6. Stromnetzwerküberwachungssystem nach Anspruch 1, wobei das Hauptgerät (M) Folgendes umfasst:
eine Empfangseinheit (21), die dazu konfiguriert ist, Daten zu empfangen, die von dem Nebengerät (S) übertragen werden;
eine Steuerungseinheit (23), die dazu konfiguriert ist, die von der Empfangseinheit (21) empfangenen Daten zu analysieren und einen Befehl zum Ausführen einer Handlung durch ein entsprechendes Nebengerät (S) zu erzeugen;
eine zweite Kommunikationseinheit (25), die dazu konfiguriert ist, den durch die Steuerungseinheit (23) erzeugten Befehl an das entsprechende Nebengerät (S) zu übertragen;
eine zweite PMU (27), die dazu konfiguriert ist, die zweiten PMU-Daten zu messen; und einen Speicher (29), der dazu konfiguriert ist, ein von der Steuerungseinheit (23) analysiertes Ergebnis und Einstellungsdaten, die in dem Hauptgerät (M) eingestellt sind, zu speichern.

7. Stromnetzwerküberwachungssystem nach Anspruch 6, wobei die Einstellungsdaten die Anzahl von Nebengeräten (S) mit empfangbaren Daten und Identifizierungsinformationen zu den Nebengeräten (S) mit empfangbaren Daten umfassen.

8. Stromnetzwerküberwachungssystem nach Anspruch 1, wobei eine Aktivierungsfunktion oder eine Deaktivierungsfunktion, die angibt, ob die Datenübertragung und/oder der Datenempfang aktiviert ist, zwischen dem Hauptgerät (M) und dem Nebengerät (S) eingestellt ist.

9. Stromnetzwerküberwachungssystem nach Anspruch 1, wobei die gemessenen ersten PMU-Daten mit einem gemeinsamen Zeitsignal einer drahtlosen GPS-Uhr synchronisiert werden.

## Revendications

1. Système de surveillance de réseau électrique qui surveille une pluralité de sous-stations, le système de surveillance du réseau électrique comprenant :
un dispositif maître (M) installé dans au moins une sous-station parmi la pluralité de sous-stations ; et
une pluralité de dispositifs esclaves (S) installés dans les sous-stations restantes à l'exception de la sous-station dans laquelle le dispositif maître (M) est installé,
dans lequel chacun des dispositifs esclaves (S) comprend :
une première unité de mesure de phaseur (PMU) (10) configurée pour mesurer des premières données PMU telles qu'une puissance réactive/active, des amplitudes et des angles de phase d'une tension et d'un courant de la sous-station dans laquelle le dispositif esclave (S) est installé ; et
une première unité de communication (12) configurée pour transmettre les premières données PMU mesurées par la première PMU (10) au dispositif maître (M),
**caractérisé en ce que** le système de surveillance de réseau électrique est configuré pour surveiller un système CA et un système à courant continu à haute tension, HVDC,
dans lequel le dispositif maître (M) est installé dans une sous-station parmi des sous-stations de système CA ou des sous-stations de système HVDC,
dans lequel chacun des dispositifs esclaves (S) est installé dans une sous-station parmi les sous-stations de système CA ou les sous-stations de système HVDC à l'exception de la sous-station dans laquelle le dispositif maître (M) est installé, et
dans lequel le dispositif maître (M) est configuré pour :
vérifier si les premières données PMU reçues sont des données de système CA ou des données de système HVDC sur la base des premières données PMU reçues,
déterminer qu'une panne ou une coupure électrique survient dans la sous-station de système CA dans laquelle le dispositif esclave (S) est installé à l'aide d'un taux de variation d'une forme d'onde d'une onde sinusoïdale des premières données PMU si les premières données PMU sont les données de système CA,
déterminer qu'une panne ou une coupure électrique survient dans la sous-station de système HVDC dans laquelle le dispositif esclave (S) est installé à l'aide d'une composante CC des premières données PMU si les premières données PMU sont les données de système HVDC, générer un ordre d'action d'un dispositif esclave (S) correspondant sur la base du résultat déterminé, et
transmettre l'ordre généré au dispositif esclave (S) correspondant, dans lequel le dispositif maître (M) est en outre configuré pour :
mesurer des deuxièmes données PMU telles qu'une puissance réactive/active, des amplitudes et des angles de phase d'une tension et d'un courant de la sous-station dans laquelle le dispositif maître (M) est installé,
vérifier si les deuxièmes données PMU sont les données de système CA ou les données de système HVDC sur la base des deuxièmes données PMU,
déterminer qu'une panne ou une coupure électrique survient dans la sous-station de système CA dans laquelle le dispositif maître (M) est installé à l'aide d'un taux de variation d'une forme d'onde d'une onde sinusoïdale des deuxièmes données PMU si les deuxièmes données PMU sont les données de système CA,
déterminer qu'une panne ou une coupure électrique survient dans la sous-station de système HVDC dans laquelle le dispositif maître (M) est installé à l'aide d'une composante CC des deuxièmes données PMU si les deuxièmes données PMU sont les données de système HVDC.

2. Système de surveillance de réseau électrique selon la revendication 1, dans lequel les premières données PMU ou l'ordre sont transmis et/ou reçus entre le dispositif maître (M) et le dispositif esclave (S) correspondant à l'aide de l'un parmi un câble de communication et/ou une communication sans fil.

3. Système de surveillance de réseau électrique selon la revendication 1, dans lequel la sous-station comprend l'une parmi une sous-station de classe 154 kV, une sous-station de classe 345 kV et une sous-station de classe 765 kV,
le dispositif maître (M) est installé au moins dans la sous-station de classe 765 kV.

4. Système de surveillance de réseau électrique selon la revendication 1, dans lequel le dispositif maître (M) est installé dans l'une des sous-stations de système HVDC.

5. Système de surveillance de réseau électrique selon la revendication 1, dans lequel le dispositif maître (M) est installé dans l'une des sous-stations de système CA.

6. Système de surveillance de réseau électrique selon la revendication 1, dans lequel le dispositif maître (M) comprend :
une unité de réception (21) configurée pour recevoir des données transmises depuis le dispositif esclave (S) ;
une unité de commande (23) configurée pour analyser les données reçues depuis l'unité de réception (21) et générer un ordre d'action du dispositif esclave (S) correspondant ;
une deuxième unité de communication (25) configurée pour transmettre l'ordre généré de l'unité de commande (23) au dispositif esclave (S) correspondant ;
une deuxième PMU (27) configurée pour mesurer les deuxièmes données PMU ; et une mémoire (29) configurée pour stocker un résultat analysé à partir de l'unité de commande (23) et des données de réglage réglées dans le dispositif maître (M).

7. Système de surveillance de réseau électrique selon la revendication 6, dans lequel les données de réglage comprennent le nombre de dispositifs esclaves (S) dont les données peuvent être reçues et des informations d'identification sur les dispositifs esclaves (S) dont les données peuvent être reçues.

8. Système de surveillance de réseau électrique selon la revendication 1, dans lequel une fonction d'activation ou une fonction de désactivation indiquant si la transmission et/ou la réception des données est permise est réglée entre le dispositif maître (M) et le dispositif esclave (S).

9. Système de surveillance de réseau électrique selon la revendication 1, dans lequel les premières données PMU mesurées sont synchronisées avec une heure commune d'horloge sans fil GPS.
